# EUROPEAN PATENT APPLICATION

(11) **EP 2 756 981 A1**
(43) Date of publication of application: **23.07.2014**
(21) Application number: 13151503.3
(22) Date of filing: 16.01.2013
(51) Int. Cl.: B60L 11/18

(54) **System for exchanging energy with an electric vehicle**

(71) Applicant: ABB B.V., 3068 AX Rotterdam (NL)
(72) Inventor: Robers, Egbert, Wouter, Joghum, 2611 LK Delft (NL); Ugur, Ali, 2521 ZK Den Haag (NL); Bouman, Crijn, 2593 XD Den Haag (NL)
(74) Representative: van Oeffelt, Abraham

(57) **Abstract**

System for exchanging energy with an electric vehicle comprising an energy exchange station, comprising a port for exchanging energy with an energy source; one for exchanging energy with a vehicle; one for data communication with the vehicle and one for data communication with a data processing device, a power converter, for exchanging energy between: the port for energy exchange with an energy source and the port for energy exchange with the vehicle, a data processing device, comprising a port for data communication with the energy exchange station; a port for data communication with a configuration device, a configuration device, comprising a port for exchanging data with the data processing device and means for editing configuration details wherein the data processing device is configured for storing data communicated with the energy exchange station and communicating with a data management system.

## Description

The present invention relates to a system for exchanging energy with an electric vehicle. Exchanging energy with a vehicle is known in the art, and the international patent application WO2011/10272 by the same applicant describes a system for exchanging energy with an electric vehicle according to the preamble of the independent claims. Although these systems fulfil a certain need, further improvements can be made, in particular in the field of data exchange with third party data management systems and communication between the charger and the electric vehicle.

Between the energy exchange station and electric vehicle two different types of communication takes place. Low level communication for safety and initialization, for example protective earth checking, if the vehicle is properly is connected, energizing and de-energizing of the system. High level communication between the energy exchange station and the electric vehicle takes also place over the same communication channel as for low level communication. The data exchanged between the vehicle and the energy exchange station is forwarded to the data management systems. The communication protocol between the energy exchange stations and the vehicles are well defined by the standards ISO/IEC 61851 and ISO/IEC 15118. This one single protocol is implemented by a single software interface and can work with different types of electric vehicles. In the case of communication with data managements systems it's a different story. There are different data management systems using different protocols. To be to able exchange data with these data management systems, we need to implement different software interfaces implementing these protocols. This increases the software complexity and increases the cost for these chargers.

The invention thereto proposes a system according to the independent claims, wherein the data processing device is configured for storing data communicated with the energy exchange station, in particular data related to energy exchange between the energy source and the vehicle, and communicating at least part of said data communicated with the energy exchange station with at least one data management system. In particular, data from power exchange systems is merged in the data processing device and routed to a data management system coupled to the power exchange system.

The data management system may herein be a charge operator data management system, wherein the charge operator is the owner of the group of energy exchange stations. This data management system can then for instance add new customers to the list which can charge at their energy exchange stations.

A data management system could be a server owned by the charge operator, grid operator, energy supplier, navigation system operator or a car manufacturer. Each of these data management systems are communicating according to different protocols, for example OCPP (Open Charge Point Protocol) for charge operators, SEP 2.0 (Smart Energy Profile) for energy suppliers and grid operators and EVPOI (Electric Vehicle Point Of Interest) for navigation systems operators.

In a further embodiment, the data processing device comprises a controller, comprising an interface for communication with the at least one energy exchange station. Such interface converts data communication to a protocol suitable for the energy exchange station.

In yet a further embodiment, the data processing device comprises a controller, comprising an interface for communication with the at least one data management system. Such interface converts data communication to a protocol suitable for the at least one data management system.

In a further embodiment the configuration device is adapted to install interfaces for communication with energy exchange stations or data management systems on the data processing device.

When there is a possibility to install interfaces, the system becomes compatible with any type of energy exchange system or any data processing system, by writing a suitable interface.

In an embodiment the data management system coupled to the energy source may herein be a data management system of an energy supplier. This data management system can then for instance invoice a registered owner or user of the electric vehicle for the energy consumed during the charge session.

In a further embodiment, the data processing device comprises a mapping table of relations of data management systems and energy exchange systems coupled to the data processing device, wherein the mapping table determines which data management system has access to data of which energy exchange station. Hereby it can be arranged that each data management system has access which is restricted to a limited number of energy exchange stations. In practice, the system will for instance be used such that data from a plurality energy exchange stations owned by charge operator is available only to the data management system of said charge operator. In a further embodiment the system will be used, such that data from an energy exchange system coupled to a power source from a specific utility company is available only to the data management system of said specific utility company.

In a further embodiment, the configuration device is configured to edit the mapping table. This way, changes can easily be made to the mapping table, which may be of use when for example new energy exchange stations are placed or added to a group of energy exchange stations owned by a charge operator.

In a further embodiment, the configuration device is further configured for determining data view rights at a user level. Herewith, users of the data processing device can obtain personal rights to see data of one or more specific energy exchange stations, for instance a couple of these energy exchange stations grouped in a site.

In yet a further embodiment, the at least one energy exchange station is configured for exchanging data with the vehicle over a energy exchange port, wherein a communication signal is superposed on a power line waveform, such as a pulse width modulation signal.

A data management system may further be enabled to configure a energy exchange station to which it has access, and the configuration device is may be adapted and used to monitor a energy exchange station status and/or a data processing device status.

In yet another embodiment, the aforementioned interfaces are configured to receive and transmit specific data to and from the energy exchange stations, the data comprising information such as the status, the configuration or usage statistics of the energy exchange stations, or the amount of data transmitted to the data management systems.

The data processing systems may also comprise an interface for communication with an energy storage system and/or a solar inverter.

The invention will now be elucidated into more detail with reference to the following figures. Herein:
- Figure 1 shows an overview of the system according to the prior art;
- Figure 2 shows an overview of the system according to the invention;
- Figure 3 shows the communication interface between a energy exchange station and an electric vehicleFigure 4 shows three related embodiments of the system according to the invention
- Figure 5 show three related embodiment of the system according to the invention, wherein the energy exchange stations are embodied by DC and AC chargers.

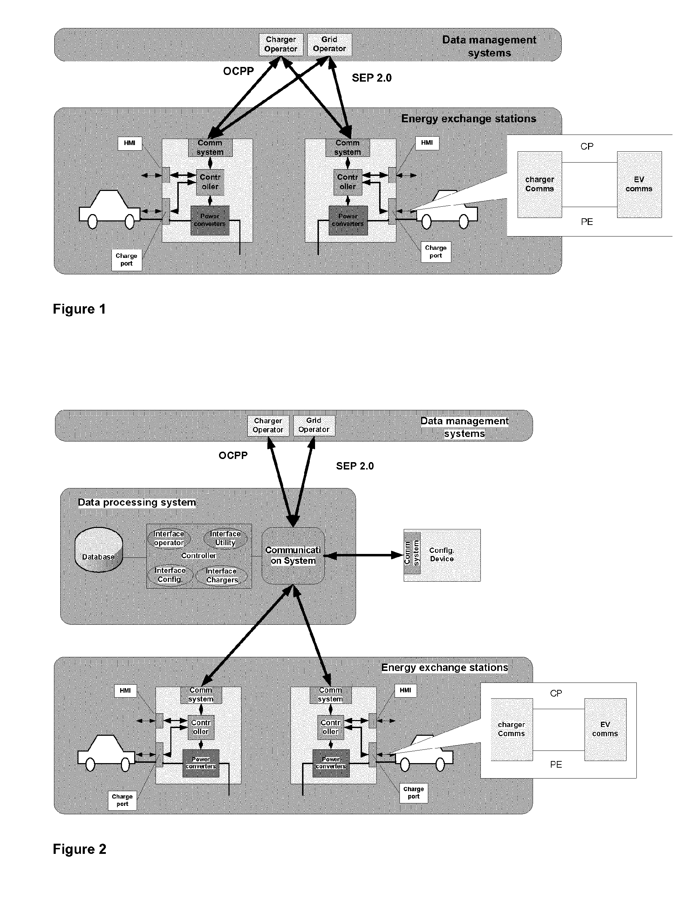

Figure 1 shows an overview of the system according to the prior art, comprising a plurality of energy exchange stations. Each of these exchange stations are in communication with several data management systems, a charge operator and a grid operator in this example. OCPP is one of the used protocols between the energy exchange stations and the charge operators and is therefore mentioned in this example. A communication according to SEP 2.0 (Smart Energy Protocol 2.0) is for example used between the energy exchange station and data management system of the grid operator. In each of these energy exchange stations different software interface have to be preinstalled in order to handle the communication with data management systems according to different protocols. One can see that implementing a charge infrastructure according to the prior art makes the system expensive and complex.

Figure 2 shows an overview of the system according to the invention, comprising a first energy exchange station and a second energy exchange station, each comprising at least one port for exchanging energy with an energy source; at least one port for exchanging energy with a vehicle; at least one port for data communication with the vehicle; at least one port for data communication with a data processing device; at least one electric power converter, for exchanging energy between: the at least one port for energy exchange with an energy source and the at least one port for energy exchange with the vehicle, a data processing device, comprising at least one port for data communication with the energy exchange station; at least one port for data communication with at least one configuration device; at least one configuration device, comprising at least one port for exchanging data with the data processing device; and means, such as a user interface, for editing configuration details, wherein the data processing device is configured for storing data communicated with the energy exchange station, in particular data related to energy exchange between the energy source and the vehicle and communicating at least part of said data communicated with the energy exchange station with at least one data management system. The data management system communicates with the data processing device en can see only data from energy exchange stations it may communicate with, because a mapping table which determines the routing of information from the energy exchange stations is stored on the data processing device. Furthermore 'operators' (1st line, 3rd line) may obtain an account on the configuration device. An administrator may assign sites, combinations of energy exchange stations (chargers) to operators. This way, an operator obtains access only to a charger of a site he is linked to. The same goes for grid operators or energy suppliers.

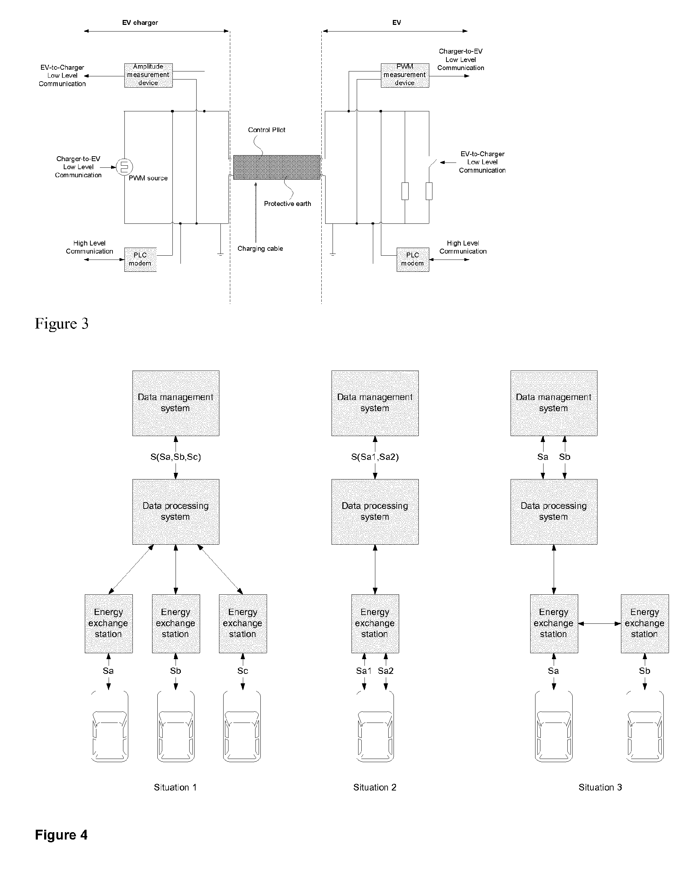

Figure 3 shows an interface between a energy exchange station and an electric vehicle. All the communication takes place over the communication line. The high level communication is used to communicate data like, transmitting the power level which can be delivered to the chargers. For example the level of current which can be delivered to the electric vehicle is communicated with plc communication, and the electric vehicle reacts by changing the current demanded from the charger. The PLC signal is added on top of the PWM signal.

All the communication takes place over the so called control-pilot line. The PWM is used for low-level signaling between vehicle and the charger. A dedicated - safety-related - signal that must be provided by a dedicated circuit over a dedicated Control Pilot (CP) line in the charging cable. The primary purpose of this signal is to establish a time critical Low Level Communication (LLC) protocol to react on safety critical system state changes like connection losses or state changes of the charger. The electric vehicle lowers the positive amplitude of the PWM signal to encode its current connection and charger status.

Then energy exchange station monitors the state of the pilot signal in order to detect whether an electric vehicle is plugged in. The charger reacts by changing its duty cycle, and vehicle reacts by changing the level of the PWM signal.

Figure 4 shows three related embodiments, for exchanging data between the data management systems and the energy exchange stations. In situation 1, the data sessions Sa, Sb and Sc between the energy exchange stations and vehicles are offered as one data session S(Sa,Sb,Sc) to the data management system.

In situation 2, multiple data sessions Sa1 and Sa2, between the vehicle and the energy exchange station are offered as one data session S(Sa1,Sa2) to the data management system. Sessions Sa1 and Sa2 can be simultaneous or consecutive. In the latter case, the sessions Sa1 and Sa2 can be two charge sessions with a pause in between them, but represented to the data management system as a single session (without a pause).

In situation 3, one of the energy exchange stations communicates over another energy exchange station with the data processing system. The data sessions Sa and Sb are communicated as one session with the data processing system. The communication of one data session S(a1,a2) between the energy exchange station and the vehicle is offered as multiple data sessions Sa1 and Sa2 to the data management system.

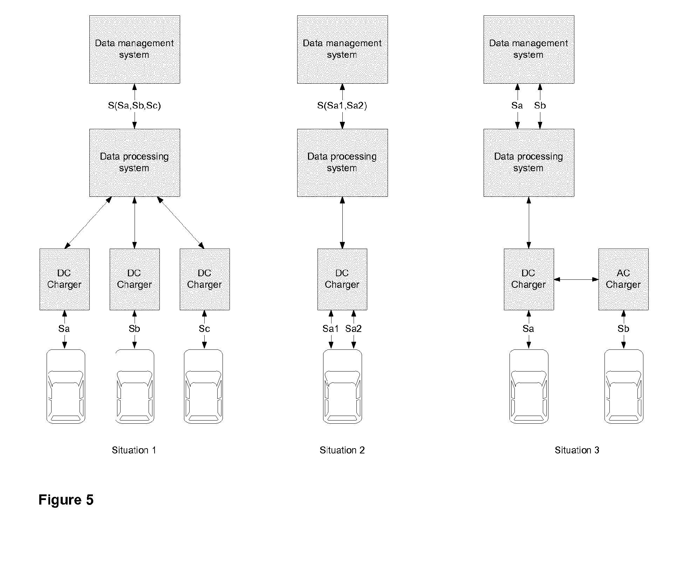

Figure 5 shows another embodiment, wherein the energy exchange stations from figure 4 are embodied by DC chargers, and in particular by an AC chargers in situation 3. In situation 3 the communication of the AC charger with the data processing system takes place over DC charger. The data processing system offers the sessions of the AC and DC charger as two simultaneous sessions to the data management system.

## Claims

1. System for exchanging energy with an electric vehicle, in particular with a battery thereof, comprising:
- at least one energy exchange station, comprising:
○ at least one port for exchanging energy with an energy source;
○ at least one port for exchanging energy with a vehicle;
○ at least one port for data communication with the vehicle;
○ at least one port for data communication with a data processing device;
○ at least one electric power converter, for exchanging energy between:
■ the at least one port for energy exchange with an energy source and
■ the at least one port for energy exchange with the vehicle,
- a data processing device, comprising:
○ at least one port for data communication with the energy exchange station;
○ at least one port for data communication with at least one configuration device;
- at least one configuration device, comprising:
○ at least one port for exchanging data with the data processing device; and
○ means, such as a user interface, for editing configuration details
**characterised in that** the data processing device is configured for
- storing data communicated with the energy exchange station, in particular data related to energy exchange between the energy source and the vehicle;
- communicating at least part of said data communicated with the energy exchange station with at least one data management system.

2. System according to claim 1, wherein the data processing device comprises a controller, comprising an interface for communication with the at least one energy exchange station.

3. System according to claim 1 or 2, wherein the data processing device comprises a controller, comprising an interface for communication with the at least one data management system.

4. System according to any of the preceding claims, wherein the configuration device is adapted to install interfaces for communication with energy exchange stations or data management systems on the data processing device.

5. System according to any of the preceding claims, wherein the data processing device comprises a mapping table of relations of data management systems and energy exchange systems coupled to the data processing device, which mapping table determines which data management system has access to data of which energy exchange station.

6. System according to claim 5, wherein the configuration device is configured to edit the mapping table.

7. System according to claim 5 or 6, wherein the configuration device is further configured for determining data view rights at a user level.

8. System according to any of claims 5-7, wherein the configuration device is further configured for grouping a plurality energy exchange stations in one site.

9. System according to any of the preceding claims, wherein the at least one energy exchange station is configured for exchanging data with the vehicle over a power exchange port, wherein a communication signal is superposed on a power line waveform, such as a pulse width modulation signal.

10. System according to any of the preceding claims, wherein exchanging power between the exchange station and the vehicle takes place according to energy exchange settings, provided by a data processing device.

11. System according to claim 10, wherein the data processing device lowers the power exchanged between at least one energy exchange station and a vehicle when the power exchanged between at least one energy exchange station and/or the power exchanged by other energy exchange stations exceeds a predetermined power limit.

12. System according to any of the preceding claims, wherein a data management system is enabled to configure a power exchange system to which it has access.

13. System according to any of the preceding claims, wherein the configuration device is configured to monitor a power exchange station status and/or a data processing device status.

14. System according to any of the preceding claims, wherein the interfaces are configured to receive and transmit specific data to and from the energy exchange stations, the data comprising information such as the status, the configuration or usage statistics of the energy exchange stations, or the amount of data transmitted to the data management systems.

15. System according to claim 4, wherein the data processing system comprises an interface for communication with an energy storage system and/or a solar inverter.

16. System according to any of the preceding claims 1-15, wherein the interfaces on the data processing devices are configured to measure the amount of data transmitted to the data management systems.

17. Method for adding a new data management system to a system according to any of the preceding claims 1-15, comprising the steps of:
- Installing an interface for communication with the data management system on the data processing device;
- Editing a mapping table on the data processing device, the mapping table indicating data routing.

18. Method for operating a system according to any of the preceding claims 1-15, wherein data from power exchange systems is merged in the data processing device and routed to a data management system coupled to the power exchange system.

19. System according to any of the preceding claims wherein the energy exchange stations are software updatable by the configuration device.

20. System according to any of the preceding claims, wherein the energy exchange stations contain multiple charge ports and communicate according to multiple standards.

21. System according to any of the preceding, wherein the communication between the data processing system and at least one data management takes place simultaneously over multiple data sessions.
